# EUROPEAN PATENT SPECIFICATION

(11) **EP 4 597 048 B1**
(45) Date of publication and mention of the grant of the patent: **12.08.2026**
(21) Application number: 25154763.4
(22) Date of filing: 29.01.2025
(51) Int. Cl.: G01F 11/02, G01F 13/00, B01F 33/841, B01F 33/85, B01F 35/88, G01F 11/38

(54) **DOSING MACHINE**
DOSIERMASCHINE
MACHINE DE DOSAGE

(30) Priority: 05.02.2024 IT 202400002283
(43) Date of publication of application: 06.08.2025
(73) Proprietor: LOGIC S.r.l., 27020 Travaco' Siccomario (PV) (IT)
(72) Inventor: Mantovani, Lucio, 20142 Milano MI (IT); Mantovani, Giancarlo, 20141 Milano MI (IT)
(74) Representative: Rondano, Davide

(56) References cited:
- EP-A1- 0 786 287
- EP-B1- 2 310 118
- EP-B1- 2 957 540
- GB-A- 767 279

## Description

### Technical field of the invention

The present invention relates in general to a dosing machine for delivering dosed amounts of fluid products, such as for example (but not exclusively) fragrances, raw materials for the cosmetic or pharmaceutical industry, and dyes for the preparation of paints or inks, as specified in the preamble of the attached independent claim 1.

### State of the art

A dosing machine of the type identified above, as is known for example from EP0786287-A1, typically comprises a plurality of containers, each intended to contain a given fluid product, and a dosing head having a corresponding plurality of dosing devices, each of which is connected to a respective container via a respective conduit, or a respective pair of conduits (a supply conduit and a return conduit), to deliver a dosed amount of the fluid product contained in said container. The dosing devices are arranged next to each other according to a carousel arrangement and are each movable in a radial direction between a rest position, in which the dosing device is spaced apart from the centre of the dosing head, and a working position, in which the dosing device is arranged with its delivering nozzle aligned with the centre of the dosing head, where there is an opening for allowing the fluid product to pass through, in order to deliver the desired amount of fluid product into a reservoir located below the dosing head. The operation of the machine thus requires that, depending on the fluid product(s) with which the reservoir is to be filled, one or more dosing devices are brought (one after the other, if fluid products contained in several containers are to be delivered) into the working position to deliver the respective fluid product

The main advantage of such an architecture is that it allows to deliver fluid product(s) into containers of different types. For example, a dosing machine with such an architecture allows to deliver fluid product(s) both into large tanks with small mouths (e.g. IBC tanks) and into small containers, carried for example by movable arms.

In known dosing machines there are basically two modes for moving the dosing devices between the rest position and the working position. According to the first mode, each dosing device is associated with a respective pneumatic cylinder, which can be controlled in extension to bring the respective dosing device to the centre of the dosing head. The main disadvantage of this solution is that it requires a large number of pneumatic cylinders, since there may be a large number of dosing devices (e.g. 24 or even more). A second mode, adopted on the machine described in the aforementioned document EP0786287-A1 provides for the use of a single driving system that moves each time the dosing device to be used towards the centre of the dosing head. This second mode requires the use of special guide structures each associated with a respective dosing device to guide movement of the latter in a radial direction between the rest position and the working position. However, this makes the structure of the dosing head particularly complex, bulky and heavy.

Further examples of dosing machines are disclosed in EP2957540-B1 and GB767279-A.

### Summary of the invention

It is an object of the present invention to provide a dosing machine that overcomes the aforementioned drawbacks of the prior art.

This and other objects are fully achieved according to the present invention by means of a dosing machine as defined in the attached independent claim 1.

Further advantageous features of the dosing machine according to the invention are defined in the dependent claims, the subject-matter of which is to be understood as forming part of the following description.

In summary, the present invention is based on the idea of using, as guide elements for guiding the radial translational movement of each dosing device of the dosing head between the rest position and the working position, straight rigid tubes which are slidably inserted into respective radial through holes provided in guide blocks carried by the support structure of the dosing head, wherein said tubes on the one hand are joined to the respective dosing devices and on the other hand are connected or connectable to the conduits which put the dosing devices in fluid communication with the respective containers. In this way, the straight rigid tubes act both as conduits for the fluid product and as guide elements, which makes it possible to avoid the above-discussed disadvantages resulting from the use of additional guide elements.

Advantageously, two straight rigid tubes are provided for each dosing device and are arranged parallel to each other, in particular one above the other with their respective longitudinal axes lying in the same vertical plane. This provides better support for the dosing device, particularly when the latter is in the working position, and also makes it possible to connect each dosing device to the respective container either via a supply conduit or via a return conduit, so that the fluid product can be recirculated between the container and the dosing device.

### Brief description of the drawings

Further features and advantages of the present invention will become more evident from the following description, which is given purely by way of non-limiting example with reference to the accompanying drawings, wherein:
- Figure 1 is a perspective view of the dosing head a dosing machine according to an embodiment of the present invention;
- Figure 2 is a side view of the dosing head of Figure 1, showing two radially opposed dosing devices both arranged in the rest position;
- Figure 3 shows, partially in section, the detail A of Figure 2;
- Figure 4 is a view similar to that of Figure 2, but in which one of the two dosing devices is arranged in the working position; and
- Figure 5 is a view similar to that of Figure 4, but relating to another embodiment of the invention, in which the dosing head comprises only one conduit for each dosing device.

### Detailed description

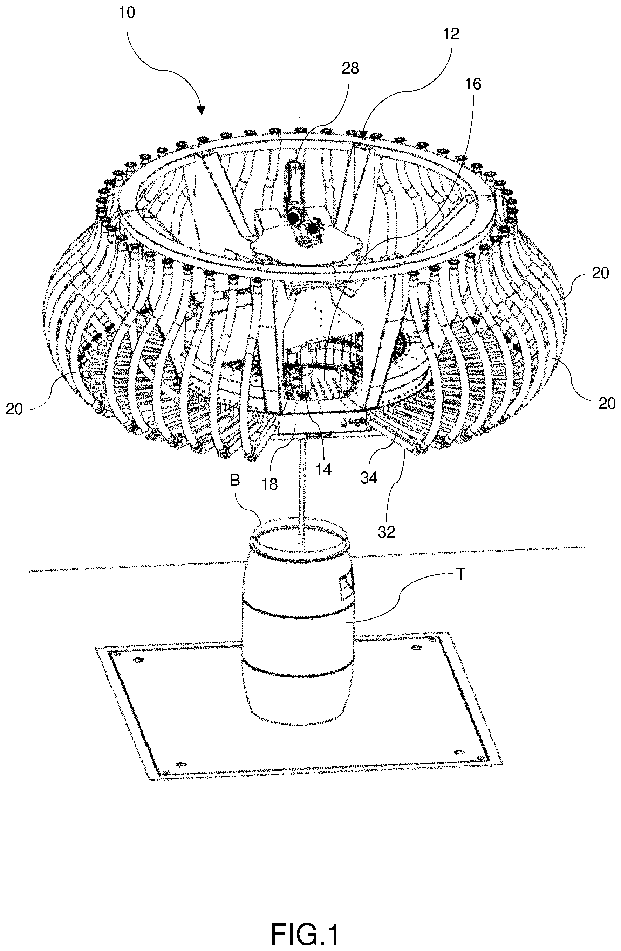

Referring first to Figure 1, a dosing head of a dosing machine according to an embodiment of the present invention is generally indicated 10. The dosing machine further comprises, in a per-se-known manner, a frame (not shown) which supports the dosing head 10 at a certain height from the ground, so as to enable a tank or vessel T to be arranged below the dosing head 10 to be filled with the fluid product(s) delivered by the machine through the dosing head 10. This frame also supports a plurality of containers (also not shown) containing fluid products different from each other, with which the tank T that is placed each time below the dosing head 10 is to be filled according to a given recipe.

The dosing head 10 comprises a support structure 12 on which a plurality of dosing devices 14 are mounted, each of which is associated with a respective container for delivering the fluid product contained therein into the tank T. The containers, and thus the dosing devices 14, may even be large in number, for example more than 20 or 30. However, the number of containers, or dosing devices, is irrelevant for the purposes of the present invention.

The dosing devices 14 are arranged according to a carousel configuration around a central opening 16 which is provided in a lower part 18 of the support structure 12 and through which the fluid product is caused to flow to be delivered into the tank T (which must therefore be arranged below the dosing head 10 so that a mouth B thereof is aligned with the opening 16).

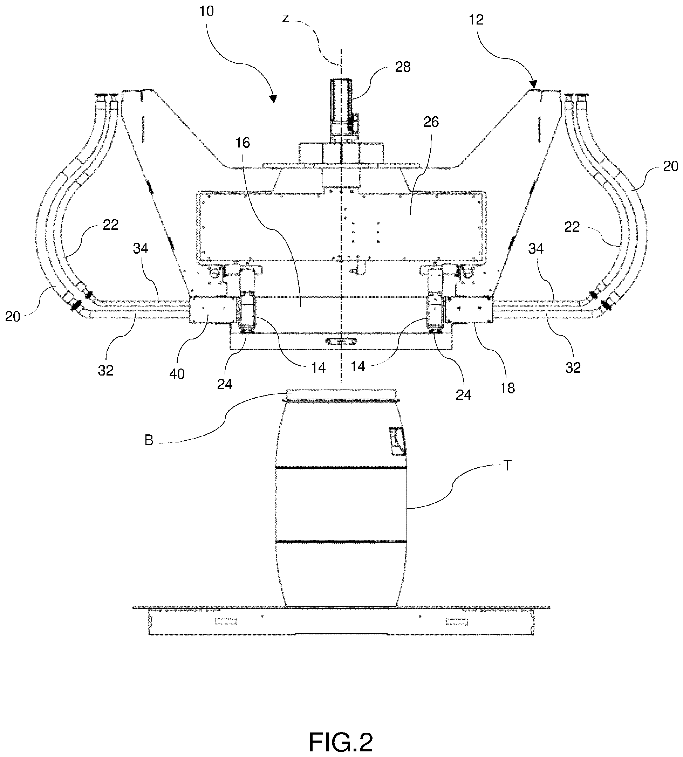

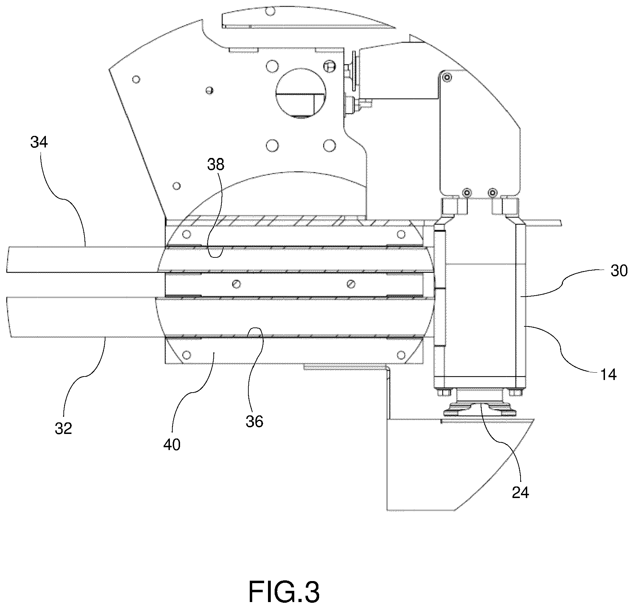

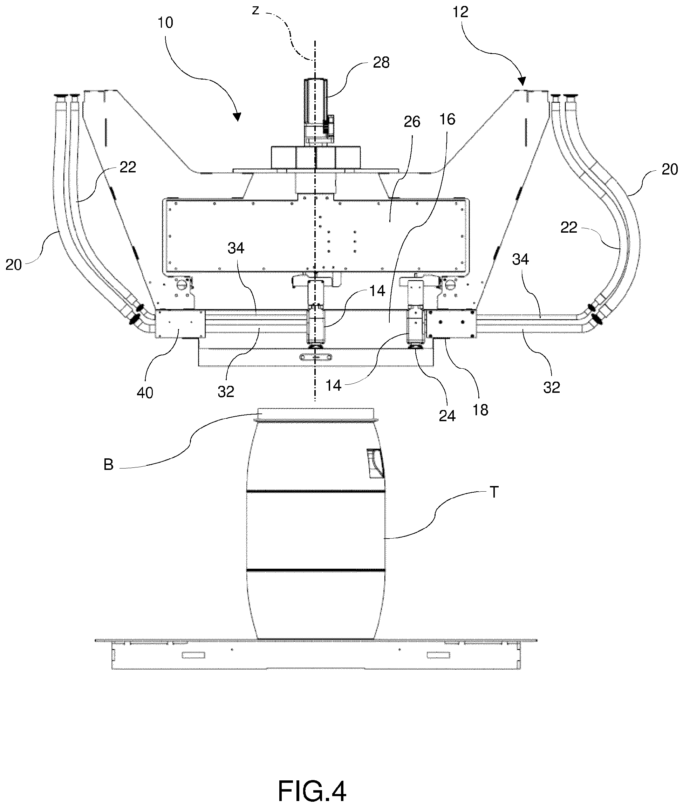

Referring also to Figures 2 and 4, each dosing device 14 is in fluid communication with the respective container via a pair of conduits 20 and 22 (in Figure 1 only the conduits 20 are shown), that is to say, a supply conduit and a return conduit, respectively, which are made as flexible conduits. Through the supply conduit 20 the fluid product flows in the direction from the container to the dosing device 14, while through the return conduit 22 the fluid product flows in the direction from the dosing device 14 to the container. Furthermore, as can be better observed in Figure 3, each dosing device 14 is provided at its bottom with a vertical-axis delivering nozzle 24, through which the fluid product is delivered in use.

Each dosing device 14 is horizontally movable in a radial direction, i.e. along a rectilinear direction passing through a central axis z of the opening 16, between a working position, in which the dosing device 14 is arranged so that its delivering nozzle 24 is substantially aligned with the central axis z to allow the fluid product delivered by the dosing device 14 to pass through the opening 16 and fall within the tank T through the mouth B, and a rest position, in which the dosing device 14 is moved outwardly relative to the working position, so as to move the delivering nozzle 24 away from the central axis z of the opening 16. In Figure 2, two diametrically opposed dosing devices 14 can be observed, which are both in the rest position, while in Figure 4 the two dosing devices 14 are located one (the one on the left, with respect to the point of view of a person looking at Figure 4) in the working position and the other (the one on the right, with respect to the point of view of a person looking at Figure 4) in the rest position.

The movement of the various dosing devices 14 between the rest position and the working position is controlled by a suitable driving system, preferably a single driving system capable of moving each time the dosing device 14 associated to the container containing the fluid product to be delivered. Referring in particular to Figure 2, such a driving system comprises, for example, a rotating structure 26, which is rotatably mounted on the support structure 12 around a vertical axis of rotation, in particular an axis of rotation coinciding with the central axis z, a motor 28 arranged to drive the rotating structure 26 into rotation around said axis, a gripping member (not shown, but in any case of a per-se-known type) arranged to engage each time with one of the dosing devices 14, and a linear actuating device (not shown, but in any case of a per-se-known type), such as, for example, a pneumatic cylinder, arranged to control the movement of the gripping device, and therefore of the dosing device 14 engaged therewith, in a radial direction. In this way, the rotating structure 26 is rotated each time so as to bring the gripping member into alignment with the dosing device 14 which is to be used to deliver the desired fluid product, then the gripping member is controlled so as to engage said dosing device 14, and finally the dosing device 14 is moved by the linear actuating device from the rest position to the working position, to be then returned to the rest position once the desired amount of that fluid product has been delivered.

Referring to Figure 3, each dosing device 14 comprises an internally hollow body 30, at the lower end of which the aforementioned delivering nozzle 24 is located. Two straight rigid tubes 32 and 34 are rigidly connected to the body 30, and are arranged parallel to each other, in particular one above the other with their respective longitudinal axes lying in the same vertical plane passing through the central axis z of the opening 16. More specifically, the two tubes 32 and 34 are each connected with the respective radially inner end to the body 30 so as to be in fluid communication with the latter. Furthermore, the two tubes 32 and 34 are connected with the respective radially outer end to the supply conduit 20 and to the return conduit 22, respectively. Each fluid product contained in one of the containers can then flow from the respective container to the body 30 of the respective dosing device 14 via the respective supply conduit 20 and the respective tube 32 and can return from the body 30 of the respective dosing device 14 to the respective container via the respective tube 34 and the respective return conduit 22.

Inside the body 30 of each dosing device 14 there is provided a vertically movable shutter (not shown, but in any case of a per-se-known type), which is controllable for example by means of a rod, which is in turn connected to an actuating device (also not shown, but in any case of a per-se-known type, for example an electromechanical or pneumatic actuating device), so as to alternatively take a raised position, or delivering position, in which it allows the fluid product arriving within the body 30 through the tube 32 to flow solely to the delivering nozzle 24, for delivering the fluid product from the dosing device 14, and a lowered position, or recirculation position, in which it allows the fluid product arriving within the body 30 through the tube 32 to flow solely to the tube 34, for recirculation of the fluid product to the container.

The two tubes 32 and 34 associated to each dosing device 14 are slidably mounted in respective through holes 36 and 38 which are provided in a respective guide block 40 in the lower part 18 of the support structure 12 of the dosing head 10 around the opening 16, and extend parallel to each other, in the present case with their respective axes lying in the same vertical plane passing through the central axis z. The two tubes 32 and 34 act, therefore, not only as conduits for allowing the fluid product to flow to/from the respective dosing device 14, but also as guide elements which, sliding in one direction or the other in the respective through holes 36 and 38 in the guide block 40, guide the respective dosing device 14 in its horizontal movement in a radial direction between the rest position and the working position defined above. Preferably, respective bushings made of low friction material, for example Teflon, are inserted into the through holes 36 and 38 so as to reduce the friction force acting on the tubes 32 and 34 during the movement of the dosing device 14 between the rest position and the working position. Alternatively, other types of support means, such as for example linear ball bearings, may be provided for low friction support of the tubes 32 and 34 within the through holes 36 and 38.

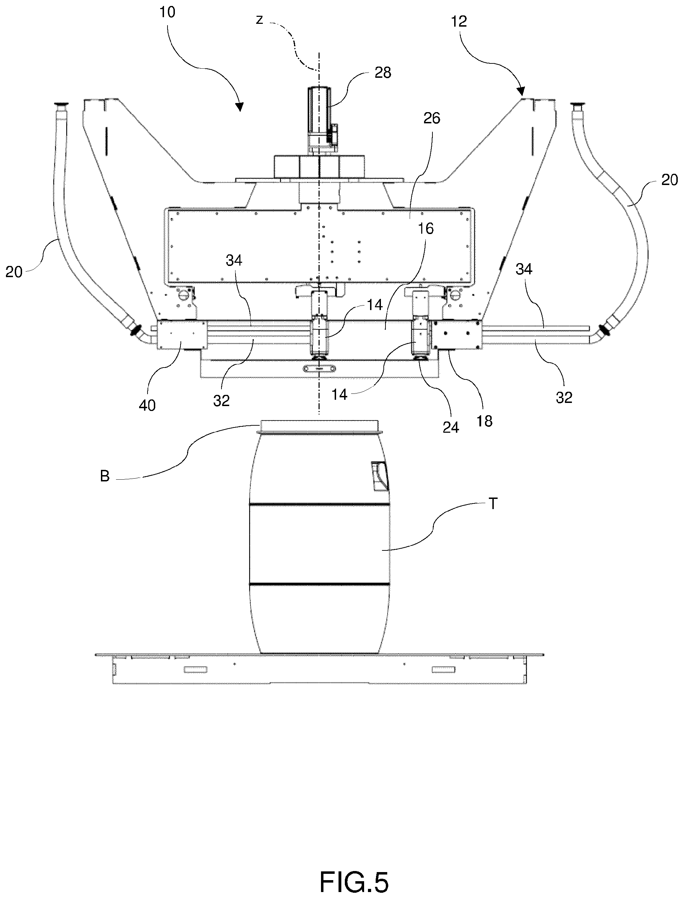

Finally, Figure 5 (in which parts and elements identical or corresponding to those of the preceding figures have been assigned the same reference numbers) shows the case in which each dosing device 14 is connected to the respective container via only one conduit, namely the supply conduit 20. In this case, each supply conduit 20 is connected to one of the two tubes 32 and 34 (in the present case the lower tube 32), and thus the other tube (in the present case the upper tube 34) acts only as guide element, instead of both guide element and conduit for the passage of the fluid product. Apart from that, what has been illustrated above with reference to the embodiment of Figures 1 to 4 still applies.

It is evident from the above description that the present invention makes it possible to reduce the overall number of components of the dosing head and thus to make the structure of the dosing head much simpler, less bulky and less heavy.

The present invention has been described herein with reference to a preferred embodiment thereof. It is to be understood that other embodiments may be envisaged within the scope of the invention, as defined by the appended claims.

## Claims

1. Dosing machine for delivering dosed amounts of fluid products, comprising:
- a plurality of containers, each arranged to contain a given fluid product, and
- a dosing head (10) comprising a support structure (12) on which a plurality of dosing devices (14) are mounted, each dosing device being connected by means of a supply conduit (20) to a respective container to deliver a dosed amount of the fluid product contained in said container,
wherein the dosing devices (14) are arranged next to each other according to a carousel arrangement around a central opening (16) of the support structure (12) and are each movable in a radial direction between a working position, in which the dosing device (14) is aligned with said opening (16) to allow the fluid product to flow through said opening (16) towards a tank or vessel (T) located beneath the dosing head (10), and a rest position, in which the dosing device (14) is shifted radially outwards relative to the working position,
**characterized in that** the dosing head (10) further comprises, for each dosing device (14), a guide block (40) mounted on the support structure (12) and having a first through hole (36) and a second through hole (38) parallel to each other, as well as a first straight rigid tube (32) slidably mounted in said first through hole (36) and a second straight rigid tube (34) slidably mounted in said second through hole (38), said first tube (32) and said second tube (34) being each rigidly connected, at a respective radially inner end thereof, to the dosing device (34), and
**in that** each first tube (32) is also connected at a radially outer end thereof to a respective supply conduit (20) so as to act not only as a guide element for guiding the movement of the respective dosing device (14) between the rest position and the working position, but also as a conduit for allowing the fluid product to flow from the supply conduit (20) to the dosing device (14).

2. Machine according to claim 1, further comprising, for each dosing device (14), a respective return conduit (22) which is connected on the one hand to a respective container and on the other to a radially outer end of a respective second tube (34), in such a manner that each second tube (34) acts not only as a guide element for guiding the movement of the respective dosing device (14) between the rest position and the working position, but also as a conduit for allowing the fluid product to flow from the dosing device (14) to the return conduit (22).

3. Machine according to claim 1 or claim 2, wherein the first through hole (36) and the second through hole (38) of each guide block (40) are arranged one above the other with their respective axes lying in a same vertical plane.

4. Machine according to claim 3, wherein said vertical plane is oriented so as to pass through a central axis (z) of said opening (16).

5. Machine according to any one of the preceding claims, wherein each guide block (40) is provided with low friction support members inserted into the first hole (36) and the second hole (38) to reduce the friction force acting on the first tube (32) and the second tube (34) during movement of the respective dosing device (14) between the rest position and the working position.

6. Machine according to any one of the preceding claims, wherein the dosing head (10) further comprises a driving system (26, 28) arranged to move each time one of the dosing devices (14) between the rest position and the working position.

## Patentansprüche

1. Dosiermaschine zum Abgeben dosierter Mengen fluider Produkte, umfassend:
- eine Vielzahl von Behältern, die jeder angeordnet sind, um ein bestimmtes fluides Produkt zu enthalten, und
- einen Dosierkopf (10), umfassend eine Stützstruktur (12), auf der eine Vielzahl von Dosiervorrichtungen (14) montiert sind, wobei jede Dosiervorrichtung mittels einer Zuführleitung (20) mit einem jeweiligen Behälter verbunden ist, um eine dosierte Menge des fluiden Produkts, das in dem Behälter enthalten ist, abzugeben,
wobei die Dosiervorrichtungen (14) gemäß einer Karussellanordnung um eine zentrale Öffnung (16) der Stützstruktur (12) nebeneinander angeordnet sind und jede in eine radiale Richtung zwischen einer Arbeitsposition, in der die Dosiervorrichtung (14) an der Öffnung (16) ausgerichtet ist, um zu ermöglichen, dass das fluide Produkt durch die Öffnung (16) zu einem Tank oder Gefäß (T), der/das sich unter dem Dosierkopf (10) befindet, fließt, und einer Ruheposition, in der die Dosiervorrichtung (14) relativ zu der Arbeitsposition radial nach außen verschoben ist, bewegbar ist,
**dadurch gekennzeichnet, dass** der Dosierkopf (10) ferner, für jede Dosiervorrichtung (14), einen Führungsblock (40), der an der Stützstruktur (12) montiert ist und ein erstes Durchgangsloch (36) und ein zweites Durchgangsloch (38) parallel zueinander aufweist, sowie ein erstes gerades starres Rohr (32), das in dem ersten Durchgangsloch (36) gleitend montiert ist, und ein zweites gerades starres Rohr (34), das in dem zweiten Durchgangsloch (38) gleitend montiert ist, umfasst, wobei das erste Rohr (32) und das zweite Rohr (34) jedes an einem jeweiligen radial inneren Ende davon mit der Dosiervorrichtung (34) starr verbunden sind, und
**dass** jedes erste Rohr (32) an einem radial äußeren Ende davon ebenso mit einer jeweiligen Zuführleitung (20) verbunden ist, um nicht nur als Führungselement zum Führen der Bewegung der jeweiligen Dosiervorrichtung (14) zwischen der Ruheposition und der Arbeitsposition zu dienen, sondern ebenso als eine Leitung zum Ermöglichen, dass das fluide Produkt von der Zuführleitung (20) zu der Dosiervorrichtung (14) fließt.

2. Maschine nach Anspruch 1, ferner umfassend, für jede Dosiervorrichtung (14), eine jeweilige Rücklaufleitung (22), die einerseits mit einem jeweiligen Behälter und andererseits mit einem radial äußeren Ende eines jeweiligen zweiten Rohrs (34) verbunden ist, auf eine derartige Weise, dass jedes zweite Rohr (34) nicht nur als Führungselement zum Führen der Bewegung der jeweiligen Dosiervorrichtung (14) zwischen der Ruheposition und der Arbeitsposition dient, sondern ebenso als eine Leitung zum Ermöglichen, dass das fluide Produkt von der Dosiervorrichtung (14) zu der Rücklaufleitung (22) fließt.

3. Maschine nach Anspruch 1 oder 2, wobei das erste Durchgangsloch (36) und das zweite Durchgangsloch (38) jedes Führungsblocks (40) übereinander angeordnet sind, wobei ihre jeweiligen Achsen in derselben vertikalen Ebene liegen.

4. Maschine nach Anspruch 3, wobei die vertikale Ebene orientiert ist, um durch eine zentrale Achse (z) der Öffnung (16) zu verlaufen.

5. Maschine nach einem der vorstehenden Ansprüche, wobei jeder Führungsblock (40) mit reibungsarmen Stützteilen die in dem ersten Loch (36) und dem zweiten Loch (38) eingesetzt sind, um die während Bewegung der jeweiligen Dosiervorrichtung (14) zwischen der Ruheposition und der Arbeitsposition auf das erste Rohr (32) und das zweite Rohr (34) wirkende Reibungskraft zu verringern, versehen ist.

6. Maschine nach einem der vorstehenden Ansprüche, wobei der Dosierkopf (10) ferner ein Antriebssystem (26, 28), das angeordnet ist, um jedes Mal eine der Dosiervorrichtungen (14) zwischen der Ruheposition und der Arbeitsposition zu bewegen, umfasst.

## Revendications

1. Machine de dosage permettant de délivrer des quantités dosées de produits fluides, comprenant :
- une pluralité de récipients, chacun agencé pour contenir un produit fluide donné, et
- une tête de dosage (10) comprenant une structure de support (12) sur laquelle sont montés une pluralité de dispositifs de dosage (14), chaque dispositif de dosage étant relié au moyen d'un conduit d'alimentation (20) à un récipient respectif pour délivrer une quantité dosée du produit fluide contenu dans ledit récipient,
dans laquelle les dispositifs de dosage (14) sont agencés les uns à côté des autres selon un agencement en carrousel autour d'une ouverture centrale (16) de la structure de support (12) et sont chacun mobiles dans une direction radiale entre une position de travail, dans laquelle le dispositif de dosage (14) est aligné sur ladite ouverture (16) pour permettre au produit fluide de s'écouler à travers ladite ouverture (16) en direction d'un réservoir ou d'un récipient (T) située sous la tête de dosage (10), et une position de repos, dans laquelle le dispositif de dosage (14) est décalé radialement vers l'extérieur par rapport à la position de travail,
**caractérisée en ce que** la tête de dosage (10) comprend en outre, pour chaque dispositif de dosage (14), un bloc de guidage (40) monté sur la structure de support (12) et ayant un premier trou traversant (36) et un second trou traversant (38) parallèles l'un à l'autre, ainsi qu'un premier tube rigide droit (32) monté de manière coulissante dans ledit premier trou traversant (36) et un second tube rigide droit (34) monté de manière coulissante dans ledit second trou traversant (38), ledit premier tube (32) et ledit second tube (34) étant chacun reliés de manière rigide, au niveau d'une extrémité radialement interne respective de ceux-ci, au dispositif de dosage (34), et
**en ce que** chaque premier tube (32) est également relié au niveau d'une extrémité radialement extérieure de celui-ci à un conduit d'alimentation (20) respectif de manière à agir non seulement en guise d'élément de guidage destiné à guider le mouvement du dispositif de dosage (14) respectif entre la position de repos et la position de travail, mais également en tant que conduit permettant au produit fluide de s'écouler du conduit d'alimentation (20) au dispositif de dosage (14).

2. Machine selon la revendication 1, comprenant en outre, pour chaque dispositif de dosage (14), un conduit de retour (22) respectif qui est relié d'une part à un récipient respectif et d'autre part à une extrémité radialement extérieure d'un second tube (34) respectif, de telle sorte que chaque second tube (34) agit non seulement comme un élément de guidage pour guider le mouvement du dispositif de dosage (14) respectif entre la position de repos et la position de travail, mais aussi en guise de conduit permettant au produit fluide de s'écouler du dispositif de dosage (14) vers le conduit de retour (22).

3. Machine selon la revendication 1 ou la revendication 2, dans laquelle le premier trou traversant (36) et le second trou traversant (38) de chaque bloc de guidage (40) sont disposés l'un au-dessus de l'autre, leurs axes respectifs se trouvant dans un même plan vertical.

4. Machine selon la revendication 3, dans laquelle ledit plan vertical est orienté de manière à passer par un axe central (z) de ladite ouverture (16).

5. Machine selon l'une quelconque des revendications précédentes, dans laquelle chaque bloc de guidage (40) est pourvu d'éléments de support à faible frottement insérés dans le premier trou (36) et le second trou (38) pour réduire la force de frottement agissant sur le premier tube (32) et le second tube (34) pendant un mouvement du dispositif de dosage (14) respectif entre la position de repos et la position de travail.

6. Machine selon l'une quelconque des revendications précédentes, dans laquelle la tête de dosage (10) comprend en outre un système d'entraînement (26, 28) agencé pour déplacer à chaque fois l'un des dispositifs de dosage (14) entre la position de repos et la position de travail.
